(19) Europäisches Patentamt
European Patent Office
Office européen des brevets

(11) **EP 3 936 296 A1**

(12) **EUROPÄISCHE PATENTANMELDUNG**

(43) Veröffentlichungstag:
**12.01.2022 Patentblatt 2022/02**

(51) Int Cl.:
***B29B 7/18*** *(2006.01)*  ***B29B 7/74*** *(2006.01)*
***B29B 7/28*** *(2006.01)*

(21) Anmeldenummer: **20184888.4**

(22) Anmeldetag: **09.07.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Continental Reifen Deutschland GmbH**
**30165 Hannover (DE)**

(72) Erfinder:
• **Wortmann, Christopher**
**30419 Hannover (DE)**

• **Sharifi, Monir**
**30419 Hannover (DE)**
• **Kuellig, Andreas**
**30419 Hannover (DE)**
• **Rennmann, Tim**
**30419 Hannover (DE)**

(74) Vertreter: **Continental Corporation**
**c/o Continental AG**
**Intellectual Property**
**Postfach 169**
**30001 Hannover (DE)**

(54) **VERFAHREN ZUR HERSTELLUNG EINER KAUTSCHUKMISCHUNG, UND VERWENDUNG EINER ZUM DURCHFÜHREN DES VERFAHRENS GEEIGNETEN VORRICHTUNG**

(57) Verfahren zur Herstellung einer Kautschukmischung, umfassend die folgenden Schritte:

A) Mischen einer Kautschukmischung in einem ersten Mischer,

B) Überführen der Mischung in einen zweiten Mischer, wobei der zweite Mischer eine Mischkammer und mindestens einen Mischrotor aufweist, wobei die Mischkammer des zweiten Mischers von einem Kammergehäuse, einer zweiten Einfüllöffnung und einer zweiten Auswurföffnung begrenzt wird, die Mischkammer des zweiten Mischers ein zweites Kammervolumen aufweist, wobei das Volumenverhältnis des Kammervolumens der Mischkammer des zweiten Mischers zum Kammervolumen der Mischkammer des ersten Mischers im Bereich von 15:1 bis 1:1 liegt, und der mindestens eine Mischrotor des zweiten Mischers einen Mischrotorkern und zumindest zwei zweite Rotorflügel aufweist,

C) Mischen der im ersten Mischer angemischten Kautschukmischung im zweiten Mischer, wobei die auf die Kautschukmischung während Schritt C) wirkenden Flügelfeldgeschwindigkeiten in der Mischkammer des zweiten Mischers kleiner sind als die auf die Kautschukmischung während Schritt A) Flügelfeldgeschwindigkeiten in der Mischkammer des ersten Mischers. Offenbart wird auch die Verwendung einer zum Durchführen des Verfahrens geeigneten Vorrichtung zur Herstellung einer Kautschukmischung.

**Fig. 1**

**Beschreibung**

Die Erfindung betrifft ein Verfahren zur Herstellung einer Kautschukmischung und die Verwendung einer zum Durchführen des Verfahrens geeigneten Vorrichtung zur Herstellung einer Kautschukmischung.

In der Kautschukindustrie müssen verschiedenste Kautschukmischungen in großen Maßstäben mit möglichst genauen und homogen verteilten Zusammensetzungen hergestellt werden. Das Vermischen der einzelnen Kautschukmischungsbestandteile miteinander umfasst dabei stets den Zielkonflikt zwischen einer möglichst schnellen Herstellung der Kautschukmischung und dem Erreichen einer möglichst hohen Qualität derselben. Insbesondere bei letzterem spielen verschiedene Parameter während der Herstellung eine Rolle und haben einen großen Einfluss auf das finale Produkt, welches beispielsweise ein Fahrzeugluftreifen sein kann. Einer der wichtigsten Parameter ist hierbei die Dispersion der Füllstoffe in der Kautschukmischung und die Homogenität der Verteilung der einzelnen Bestandteile in der Kautschukmischung.

Aufgrund dieser unterschiedlichen Anforderungen sind verschiedene Vorrichtungen zur Herstellung Kautschukmischungen wie Innenmischer bekannt, welche beispielsweise in den nachstehenden Dokumenten näher beschrieben sind.

EP 2736690 B1 offenbart "Verfahren zur Herstellung einer Ausgangsmischung, während dessen nacheinander die folgenden Schritte ausgeführt werden: A - in eine Mischeinrichtung von der Art Innenmischer (100) von der Art, die einen Mischbehälter (116) enthält, in den Rotoren (112, 113) montiert sind, die in Drehung versetzt werden und radiale Vorsprünge aufweisen, die zwischen sich und mit dem Behälter einen Luftspalt (e) bilden, werden eine Kautschukmatrix, Verstärkungsfüllstoffe und ggf. andere Bestandteile eingeführt, mit Ausnahme des Vernetzungssystems, B - das Mischen der Bestandteile im Behälter wird ausgeführt, bis eine homogene Mischung erhalten wird, indem sichergestellt wird, dass die Temperatur der Mischung niedriger als oder gleich 170°C bleibt [...]" (siehe Anspruch 1).

Die EP 0618055 B1 beschreibt ein Verfahren zum Verarbeiten von nicht reaktive Zusatzstoffe enthaltenden Kautschukgrundmischungen zu Kautschukfertigmischungen unter Verwendung eines Stempelkneters, wobei dem Stempelkneter eine vorher hergestellte, fertige Grundmischung zum Plastizieren zugeführt wird und nach dem Plastizieren die Charge unmittelbar einem stempellosen Kneter zugeführt wird, um die Fertigmischung durch Zugabe von reaktiven Zusatzstoffen bei verringerter Temperatur im Vergleich zum Stempelkneter fertig zu mischen.

Eine immer häufiger verwendete Vorrichtung zur Herstellung von Kautschukmischungen sind die so genannten Tandemmischer, welche im Stand der Technik im Allgemeinen schon bekannt sind:

DE4309451A1 betrifft ein Verfahren zur Herstellung von Kautschukmischungen, bei dem in einer ersten Stufe in einem Stempelkneter aus Kautschuk und nicht reaktiven Zusatzstoffen chargenweise eine Grundmischung hergestellt und die Grundmischung ohne Zwischenlagerung in einer zweiten Stufe unter Zufügen von reaktiven Zusatzstoffen in einem stempellosen Kneter ebenfalls chargenweise bei verringerter Temperatur fertig gemischt wird.

Solche Tandemmischer haben die Herstellungszeit eines Batchs einer Kautschukmischung erheblich reduziert. Es liegt jedoch ein Bedarf im Stand der Technik vor, eine ausreichend hohe Dispersion der Füllstoffe in der Kautschukmischung und/oder eine ausreichend hohe Homogenität der Verteilung der einzelnen Bestandteile in der Kautschukmischung in beim Tandemmischen zu erreichen, ohne die Herstellungszeit zu vergrößern. Dies gilt insbesondere für neuartige Kautschukmischungen mit einem hohen Anteil an Silika.

Es ist daher Aufgabe, die der Erfindung zugrunde liegt, ein Verfahren zur Herstellung eines Fahrzeugreifens oder die Verwendung einer Vorrichtung zur Herstellung einer Kautschukmischung so zu ändern, dass die vorstehend beschriebenen Nachteile aus dem Stand der Technik nicht mehr auftreten.

Gelöst wird diese Aufgabe erfindungsgemäß durch ein Verfahren zur Herstellung einer Kautschukmischung, umfassend die folgenden Schritte:

A) Mischen einer Kautschukmischung in einem ersten Mischer, wobei der erste Mischer eine Mischkammer und mindestens einen Mischrotor in der Mischkammer des ersten Mischers aufweist, wobei

   i. die Mischkammer des ersten Mischers ein erstes Kammervolumen aufweist,
   ii. die Mischkammer des ersten Mischers von einem Kammergehäuse, einer ersten Einfüllöffnung und einer ersten Auswurföffnung begrenzt wird
   und
   iii. der mindestens eine Mischrotor des ersten Mischers einen Mischrotorkern und zumindest zwei erste Rotorflügel aufweist,

B) Überführen der im ersten Mischer angemischten Kautschukmischung in einen zweiten Mischer, wobei der zweite Mischer eine Mischkammer und mindestens einen Mischrotor in der Mischkammer des zweiten Mischers aufweist, wobei

   i. die Mischkammer des zweiten Mischers von einem Kammergehäuse, einer zweiten Einfüllöffnung und einer zweiten Auswurföffnung begrenzt wird,
ii. die Mischkammer des zweiten Mischers ein zweites Kammervolumen aufweist, wobei das Volumenverhältnis des Kammervolumens der Mischkammer des zweiten Mischers zum Kammervolumen der Mischkammer des ersten Mischers im Bereich von 15:1 bis 1:1 liegt,
und
iii. der mindestens eine Mischrotor des zweiten Mischers einen Mischrotorkern und zumindest zwei zweite Rotorflügel aufweist,

C) Mischen der im ersten Mischer angemischten Kautschukmischung in dem zweiten Mischer, wobei die auf die Kautschukmischung während Schritt C) wirkenden Flügelfeldgeschwindigkeiten in der Mischkammer des zweiten Mischers kleiner sind als die auf die Kautschukmischung während Schritt A) Flügelfeldgeschwindigkeiten in der Mischkammer des ersten Mischers.

Überraschenderweise wurde herausgefunden, dass durch das Erhöhen der Flügelfeldgeschwindigkeiten in der ersten Mischkammer im Vergleich zu den Flügelfeldgeschwindigkeiten in der zweiten Mischkammer eine bessere Dispersion der Füllstoffe und/oder eine höhere Homogenität in der Kautschukmischung erreicht wird. Ohne an eine wissenschaftliche Theorie gebunden sein zu wollen, wird davon ausgegangen, dass durch die höheren Flügelfeldgeschwindigkeiten in der ersten Mischkammer eine höhere Dispersion der Füllstoffe der Kautschukmischung erreicht wird, welche dann in der zweiten Mischkammer besser verteilt werden. Somit kann eine höhere Homogenität der Bestandteile der Kautschukmischung erreicht werden.
Die Erhöhung der Flügelfeldgeschwindigkeiten kann dabei

-   auf qualitative Weise, d.h. proportional zu den Schergeschwindigkeiten,
    oder
-   auf quantitative Weise, d.h. proportional zu der Fläche, an welcher die Schergeschwindigkeiten gebildet werden, erfolgen. Letzteres wird im Folgenden mittels der Formel für die Flügelfeldgeschwindigkeit quantifiziert.

Bereits die alleinige Erhöhung der Schergeschwindigkeit oder die alleinige Erhöhung der Fläche, an welcher die Schergeschwindigkeiten gebildet werden, führt zu einer besseren Dispersion der Füllstoffe und/oder einer höheren Homogenität der Bestandteile der Kautschukmischung in der entsprechenden Mischkammer, welche hier bevorzugt und vorteilhafterweise die erste Mischkammer einer erfindungsgemäßen Vorrichtung ist. Werden sowohl die Schergeschwindigkeit als auch die Fläche, an welcher die Schergeschwindigkeiten gebildet werden, gleichzeitig erhöht, so erhöht sich die Dispersion der Füllstoffe und/oder die Homogenität der Bestandteile in der Kautschukmischung überproportional in der entsprechenden Mischkammer, welche hier vorteilhafterweise die erste Mischkammer einer erfindungsgemäßen Vorrichtung ist.
Im Rahmen der vorliegenden Erfindung werden die Ausdrücke "Mischkammer des ersten Mischers" und "erste Mischkammer" synonym verwendet. Im Rahmen der vorliegenden Erfindung die Ausdrücke "Mischkammer des zweiten Mischers" und "zweite Mischkammer" synonym verwendet. Im Rahmen der vorliegenden Erfindung werden die Ausdrücke "Mischrotoren" und "Mischerrotoren" synonym verwendet
Bevorzugt ist ein Verfahren wie vorstehend beschrieben oder wie vorstehend als bevorzugt beschrieben, wobei jede Mischkammer mindestens zwei Mischrotoren wie vorstehend beschrieben, bevorzugt genau zwei Mischrotoren wie vorstehend beschrieben, umfasst.
Bevorzugt ist ein Verfahren wie vorstehend beschrieben oder wie vorstehend als bevorzugt beschrieben, wobei das Verhältnis der auf die Kautschukmischung während Schritt A) wirkenden Flügelfeldgeschwindigkeiten in der Mischkammer des ersten Mischers zu den auf die Kautschukmischung während Schritt C) wirkenden Flügelfeldgeschwindigkeiten in der Mischkammer des zweiten Mischers im Bereich von 1 000 000:1 bis 1,01:1 liegt, bevorzugt im Bereich von 100 000:1 bis 5:1, besonders bevorzugt im Bereich von 10 000: 1 bis 10:1, ganz besonders bevorzugt im Bereich von 500:1 bis 100:1.
Ein Vorteil des vorstehend beschriebenen Aspekts der vorliegenden Erfindung ist, dass sich durch die vorstehend beschriebenen relativ hohen Flügelfeldgeschwindigkeiten in der ersten Mischkammer im Vergleich zu den Flügelfeldgeschwindigkeiten in der zweiten Mischkammer die besagte Homogenität und/oder die besagte Dispersion der Füllstoffe in der Kautschukmischung noch weiter verbessert.
Bevorzugt ist ein Verfahren wie vorstehend beschrieben oder wie vorstehend als bevorzugt beschrieben, wobei

-   die auf die Kautschukmischung während Schritt A) wirkenden Flügelfeldgeschwindigkeiten in der Mischkammer des ersten Mischers im Bereich von 10 m/s bis 300 m/s liegt, bevorzugt im Bereich von 20 m/s bis 200 m/s, besonders bevorzugt im Bereich von 30 m/s bis 150 m/s, ganz besonders bevorzugt im Bereich von 4 0 m/s bis 100 m/s, und/oder

- die auf die Kautschukmischung während Schritt C) wirkenden Flügelfeldgeschwindigkeiten in der Mischkammer des zweiten Mischers im Bereich von 1 m/s bis 80 m/s liegt, bevorzugt im Bereich von 3 m/s bis 50 m/s, besonders bevorzugt im Bereich von 3 m/s bis 40 m/s, ganz besonders bevorzugt im Bereich von 5 m/s bis 30 m/s.

Im Rahmen der vorliegenden Erfindung ergeben sich die Flügelfeldgeschwindigkeiten somit im einfachsten Falle aus dem Produkt

- der Schergeschwindigkeit eines Rotors in einer bestimmten Mischkammer
- mit der in Umfangsrichtung verlaufenden Umfangslänge L auf der Außenwand des Rotorflügels, an der die entsprechenden Schergeschwindigkeiten gebildet werden.

Dies ergibt sich aus den folgenden Definitionen:
Die Schergeschwindigkeiten, also wie qualitativ hoch die Kräfte am maximalen Radius des Rotorflügels sind, werden im Rahmen der vorliegenden Erfindung bevorzugt gemäß der folgenden Formel 1 berechnet:

$$\text{Schergeschwindigkeit} = v / h \qquad\qquad\qquad \text{(Formel 1)},$$

wobei

v = Kreisgeschwindigkeit des Rotors [1/s] x maximaler Radius desselben Rotors [mm]
und
h = Abstand zwischen der Innenwand des Kammergehäuses und der Außenwand des Rotorkerns desselben Rotors [mm].

Die Quantität der Kräfte ergibt sich aus der Fläche eines Rotorflügels eines Rotors, auf dem der vorstehend in Formel 1 beschriebene maximale Radius des Rotors liegt. Bei Rotorflügeln mit einem rechteckigen oder trapezförmigen Querschnitt zur Rotationsachse des entsprechenden Rotors entspricht diese Fläche der dem Kammergehäuse nächstgelegenen Außenwandfläche des Rotorflügels:

$$\text{Flügelfeldgeschwindigkeit} = L \cdot v / h \qquad\qquad \text{(Formel 2)},$$

wobei

v = Kreisgeschwindigkeit des Rotors [1/s] x maximaler Radius desselben Rotors [mm],
L = maximale Umfangslänge der Außenwandfläche, auf der der maximale Radius desselben Rotors liegt [m],
und
h = Abstand zwischen der Innenwand des Kammergehäuses und der Außenwand des Rotorkerns desselben Rotors [mm].

Im Rahmen der vorliegenden Erfindung besteht ein Rotor aus einem Rotorkern und einem oder mehreren Rotorflügeln.
Im Rahmen der vorliegenden Erfindung erstreckt sich der Radius des Rotors senkrecht von der Drehachse des Rotors bis zum äußersten Punkt des Rotorflügels, also in der radialen Richtung der Drehachse des Rotors. Der maximale Radius des Rotors ist der Abstand, bei dem die Distanz zwischen der besagten Drehachse des Rotors und dem besagten radial äußersten Punkt des Rotorflügels des desselben Rotors, d.h. der Rotorflügelspitze, am größten ist.
Im Rahmen der vorliegenden Erfindung erstreckt sich die Umfangslänge einer Außenfläche eines Rotors auf der Außenwandfläche in Umfangsrichtung, wobei die maximale Umfangslänge der Außenfläche des Rotors die Umfangslänge ist, welche die längste Erstreckung auf der besagten Außenfläche in Umfangsrichtung bildet. Bei einer rechteckigen Außenwandfläche eines Rotorflügels entspricht dies häufig der Diagonalen zwischen zwei gegenüberliegenden Ecken der Außenwandfläche.
Besonders bevorzugt ist ein Verfahren wie vorstehend beschrieben oder wie vorstehend als bevorzugt beschrieben, wobei

- die auf die Kautschukmischung während Schritt A) wirkenden Flügelfeldgeschwindigkeiten in der Mischkammer des ersten Mischers im Bereich von 20 m/s bis 300 m/s liegt und

- die auf die Kautschukmischung während Schritt C) wirkenden Flügelfeldgeschwindigkeiten in der Mischkammer des zweiten Mischers im Bereich von 1 m/s bis 80 m/s liegt.

Dies erhöht die vorstehend beschriebene Dispersion der Füllstoffe und die vorstehend beschriebene Homogenität in der Kautschukmischung im Vergleich zu einem Verfahren wie vorstehend beschrieben oder wie vorstehend als bevorzugt beschrieben.

Ganz besonders bevorzugt ist ein Verfahren wie vorstehend beschrieben oder wie vorstehend als bevorzugt beschrieben, wobei

- die auf die Kautschukmischung während Schritt A) wirkenden Flügelfeldgeschwindigkeiten in der Mischkammer des ersten Mischers im Bereich von 20 m/s bis 200 m/s liegt und
- die auf die Kautschukmischung während Schritt C) wirkenden Flügelfeldgeschwindigkeiten in der Mischkammer des zweiten Mischers im Bereich von 3 m/s bis 50 m/s liegt.

Dies erhöht die vorstehend beschriebene Dispersion der Füllstoffe und die vorstehend beschriebene Homogenität in der Kautschukmischung im Vergleich zu einem Verfahren wie vorstehend als besonders bevorzugt beschrieben.

Insbesondere ganz besonders bevorzugt ist ein Verfahren wie vorstehend beschrieben oder wie vorstehend als bevorzugt beschrieben, wobei

- die auf die Kautschukmischung während Schritt A) wirkenden Flügelfeldgeschwindigkeiten in der Mischkammer des ersten Mischers im Bereich von 30 m/s bis 150 m/s liegt und
- die auf die Kautschukmischung während Schritt C) wirkenden Flügelfeldgeschwindigkeiten in der Mischkammer des zweiten Mischers im Bereich von 3 m/s bis 30 m/s liegt.

Dies erhöht die vorstehend beschriebene Dispersion der Füllstoffe und die vorstehend beschriebene Homogenität in der Kautschukmischung im Vergleich zu einem Verfahren wie vorstehend als ganz besonders bevorzugt beschrieben.

Darüber hinaus insbesondere ganz besonders bevorzugt ist ein Verfahren wie vorstehend beschrieben oder wie vorstehend als bevorzugt beschrieben, wobei

- die auf die Kautschukmischung während Schritt A) wirkenden Flügelfeldgeschwindigkeiten in der Mischkammer des ersten Mischers im Bereich von 30 m/s bis 100 m/s liegt und
- die auf die Kautschukmischung während Schritt C) wirkenden Flügelfeldgeschwindigkeiten in der Mischkammer des zweiten Mischers im Bereich von 5 m/s bis 30 m/s liegt.

Dies erhöht die vorstehend beschriebene Dispersion der Füllstoffe und die vorstehend beschriebene Homogenität in der Kautschukmischung im Vergleich zu einem Verfahren wie vorstehend als insbesondere ganz besonders bevorzugt beschrieben.

Bevorzugt ist ein Verfahren wie vorstehend beschrieben oder wie vorstehend als bevorzugt beschrieben, wobei der zweite Mischer eine Zuführeinheit zum Zuführen von Kautschukmischungsbestandteilen in das Unterkammergehäuse aufweist, bevorzugt eine Zuführeinheit zum Zuführen von Vulkanisationsmitteln die Mischkammer des zweiten Mischers, wobei zwischen den Schritten A) und C) oder während des Schrittes A) und/oder C) Vulkanisationsmitteln die Mischkammer des zweiten Mischers überführt werden, sodass eine unvulkanisierte Kautschukfertigmischung in Schritt C) entsteht.

Ein Vorteil des vorstehend beschriebenen Aspekts der vorliegenden Erfindung ist, dass bei dem Hinzufügen von Vulkanisationsmitteln zu der zweiten Mischkammer direkt eine Kautschukfertigmischung hergestellt wird. Mit einem erfindungsgemäßen Verfahren wie vorstehend beschrieben ist es möglich Kautschukfertigmischungen herzustellen, welche aufgrund des Tandem Mischens in kurzer Zeit hergestellt werden können und gleichzeitig eine hohe Dispersion der Füllstoffe und eine hohe Homogenität der Kautschukmischung aufweisen.

In besonders hohem Maße bevorzugt ist ein Verfahren wie vorstehend beschrieben umfassend die folgenden Schritte:

A) Mischen einer Kautschukmischung in einem ersten Mischer, wobei der erste Mischer eine Mischkammer und mindestens einen Mischrotor in der Mischkammer des ersten Mischers aufweist, wobei

i. die Mischkammer des ersten Mischers ein erstes Kammervolumen aufweist,

ii. die Mischkammer des ersten Mischers von einem Kammergehäuse, einer ersten Einfüllöffnung und einer ersten Auswurföffnung begrenzt wird

und

iii. der mindestens eine Mischrotor des ersten Mischers einen Mischrotorkern und zumindest zwei erste Rotorflügel aufweist,

B) Überführen der im ersten Mischer angemischten Kautschukmischung in einen zweiten Mischer, wobei der zweite Mischer eine Mischkammer und mindestens einen Mischrotor in der Mischkammer des zweiten Mischers aufweist, wobei

iv. die Mischkammer des zweiten Mischers von einem Kammergehäuse, einer zweiten Einfüllöffnung und einer zweiten Auswurföffnung begrenzt wird,

v. die Mischkammer des zweiten Mischers ein zweites Kammervolumen aufweist, wobei das Volumenverhältnis des Kammervolumens der Mischkammer des zweiten Mischers zum Kammervolumen der Mischkammer des ersten Mischers im Bereich von 5:1 bis 1,1:1 liegt,

und

vi. der mindestens eine Mischrotor des zweiten Mischers einen Mischrotorkern und zumindest zwei zweite Rotorflügel aufweist,

C) Mischen der im ersten Mischer angemischten Kautschukmischung in dem zweiten Mischer, wobei die auf die Kautschukmischung während Schritt C) wirkenden Flügelfeldgeschwindigkeiten in der Mischkammer des zweiten Mischers kleiner sind als die auf die Kautschukmischung während Schritt A) Flügelfeldgeschwindigkeiten in der Mischkammer des ersten Mischers,

wobei

- der auf die Kautschukmischung während Schritt A) wirkenden Flügelfeldgeschwindigkeiten in der Mischkammer des ersten Mischers zu den auf die Kautschukmischung während Schritt C) wirkenden Flügelfeldgeschwindigkeiten in der Mischkammer des zweiten Mischers im Bereich von 100:1 bis 1:2 liegt,
- des besagten ersten Volumenverhältnisses zum besagten zweiten Volumenverhältnis im Bereich von 10: 1 bis 2:1 liegt,
- der zweite Mischer eine Zuführeinheit zum Zuführen von Vulkanisationsmitteln die Mischkammer des zweiten Mischers aufweist, wobei zwischen den Schritten A) und C) oder während des Schrittes A) oder C) Vulkanisationsmitteln die Mischkammer des zweiten Mischers überführt werden, sodass eine unvulkanisierte Kautschukfertigmischung in Schritt C) entsteht,
- der Silika-Anteil der Kautschukmischung im Bereich von 40 phr bis 200 phr liegt und weniger als 0,1 phr Ruß in der Kautschukmischung vorliegen,
- der Silan-Anteil der Kautschukmischung im Bereich von 0,1 phr bis 20 phr und
- die Kautschukmischung mindestens einen Kautschuk umfasst ausgewählt aus der Gruppe bestehend aus NR, IR, SBR, SSBR und BR.

Die vorstehend beschriebenen vorteilhaften Ausführungen eines erfindungsgemäßen Verfahrens zur Herstellung einer Kautschukmischung gelten auch für sämtliche Ausführungen einer nachstehend beschriebenen Verwendung und die nachstehend diskutierten vorteilhaften Ausführungen erfindungsgemäßer Verwendungen gelten entsprechend für sämtliche Ausführungen eines erfindungsgemäßen Verfahrens zur Herstellung einer Kautschukmischung.

Die Erfindung betrifft auch eine Verwendung einer Vorrichtung zur Herstellung einer Kautschukmischung, wobei die Vorrichtung zum Durchführen eines Verfahrens wie vorstehend beschrieben oder wie vorstehend als bevorzugt beschrieben geeignet ist und die folgenden Komponenten umfasst:

- einen ersten Mischer umfassend eine Mischkammer mit mindestens einem ersten Mischrotor, wobei die Mischkammer des ersten Mischers

- ein erstes Kammervolumen aufweist

und

- von einem Kammergehäuse, einer ersten Einfüllöffnung und einer ersten Auswurföffnung begrenzt wird,

wobei jeder der mindestens eine ersten Mischrotoren einen Mischerrotorkern und zumindest zwei erste Rotorflügel aufweist, wobei das Verhältnis des Gesamtvolumens sämtlicher erster Rotorflügel sämtlicher erster Mischrotoren zu dem Mischvolumen der Mischkammer des ersten Mischers ein erstes Volumenverhältnis darstellt, und

- einen zweiten Mischer umfassend eine Mischkammer mit mindestens einem zweiten Mischrotor, wobei die Mischkammer des zweiten Mischers

    - ein zweites Kammervolumen aufweist
      und
    - von einem Kammergehäuse, einer zweiten Einfüllöffnung und einer zweiten Auswurföffnung begrenzt wird,

    wobei der mindestens eine zweite Mischrotor einen Mischerrotorkern und zumindest zwei zweite Rotorflügel aufweisen, wobei das Verhältnis des Gesamtvolumens sämtlicher zweiter Rotorflügel sämtlicher zweiter Mischrotoren zu dem Mischvolumen der Mischkammer des zweiten Mischers ein zweites Volumenverhältnis darstellt, wobei das Verhältnis des zweiten Kammervolumens der Mischkammer des zweiten Mischers zum ersten Kammervolumen der Mischkammer des ersten Mischers im Bereich von 15:1 bis 1:1 liegt,

dadurch gekennzeichnet, dass
das Verhältnis des besagten ersten Volumenverhältnisses zum besagten zweiten Volumenverhältnis im Bereich von 50:1 bis 1:10 liegt, bevorzugt im Bereich von 20:1 bis 1:1 liegt, bevorzugt im Bereich von 15:1 bis 1,1:1 liegt, besonders bevorzugt im Bereich von 10:1 bis 2:1.
Überraschenderweise wurde im Rahmen der vorliegenden Erfindung herausgefunden, dass das Verhältnis des besagten ersten Volumenverhältnisses zum besagten zweiten Volumenverhältnis die Dispersion der Füllstoffe und/oder die Verteilung der Bestandteile in der Kautschukmischung verbessert.

Ohne an eine wissenschaftliche Theorie gebunden sein zu wollen, sei auf folgendes hingewiesen, um die vorstehend beschriebene Verbesserung der Dispersion der Füllstoffe und/oder die Verteilung der Bestandteile in der Kautschukmischung aufgrund der erfindungsgemäßen Verwendung näher zu erläutern:
Wie vorstehend bereits erläutert können Flügelfeldgeschwindigkeiten auf qualitative oder quantitative Weise erhöht werden. Wie vorstehend ebenfalls bereits beschrieben ist die Quantität der Flügelfeldgeschwindigkeiten von der Größe der besagten Fläche der Außenwand eines Rotorflügels wie vorstehend in Formel 2 dargestellt abhängig und die Qualität der Flügelfeldgeschwindigkeiten unter anderem von dem maximalen Radius des Rotors auf der besagten Fläche der Außenwand wie vorstehend in Formel 1 abhängig beiden vorstehend beschriebenen Parameter, das heißt sowohl die Größe der Fläche der Außenwand als auch der maximale Radius des Rotors und somit der Abstand der Außenwand des Rotorflügels zur Innenwand des jeweiligen Kammergehäuses sind geometrische Faktoren der Anordnung von den Mischrotoren zu dem jeweiligen Kammergehäuse der Mischkammer, in der sich die besagten Mischrotoren befinden. Diese geometrischen Faktoren sind zusammengefasst für die erste Mischkammer im Rahmen der vorliegenden Erfindung in dem ersten Volumenverhältnis und für die zweite Mischkammer im Rahmen der vorliegenden Erfindung in dem zweiten Volumenverhältnis definiert. Anders ausgedrückt stellen das vorstehend beschriebene erste Volumenverhältnis sowie gleichermaßen das vorstehend beschriebene zweiten Volumenverhältnis das Volumen sämtlicher Rotorflügels ins Verhältnis zu dem Mischvolumen der entsprechenden Mischkammer, in der sich die entsprechenden Rotorflügels befinden. Je größer das Volumen eines Rotorflügels im Vergleich zu der entsprechenden Mischkammer,

- desto näher ist die besagte Außenwand der Rotorflügels an der Innenwand des Kammergehäuses der entsprechenden Mischkammer, d.h. desto größer der maximale Radius des Rotors und desto größere sind die Schergeschwindigkeiten gemäß der vorstehenden Formel 1,
  und/oder
- desto größer ist die besagte Fläche der Außenwand der Rotorflügels und somit die Quantität der Flügelfeldgeschwindigkeiten gemäß der vorstehenden Formel 2.

Die Verknüpfung der verbesserten besagten Dispersion der Füllstoffe und der verbesserten Verteilung der Bestandteile in der Kautschukmischung mit den vorstehend beschriebenen Volumenverhältnis ist eine besondere Leistung der vorliegenden Erfindung.

Zusätzlich wurde im Rahmen der vorliegenden Erfindung herausgefunden, dass durch das vorstehend gesagte Verhältnis des ersten Volumenverhältnisses zum zweiten Volumenverhältnis die einer erfindungsgemäßen Vorrichtung, insbesondere eines Tandemmischers, erhöht werden kann, da eine größere Menge an Kautschukmischung pro Mischzyklus bezogen auf die gesamterfindungsgemäße Vorrichtung erreicht werden kann. Dies gilt sowohl für silika- als auch russhaltigen Kautschukmischungen.

Im Rahmen der vorliegenden Erfindung ist das Mischvolumen einer Mischkammer das Kammervolumen der entsprechenden Mischkammer abzüglich des Volumens, welche sämtliche Rotorkerne in der entsprechenden Mischkammer einnehmen. Das Mischvolumen eine Mischkammer entspricht somit im Rahmen der vorliegenden Erfindung dem Volumen, in welcher eine Kautschukmischung in der entsprechenden Mischkammer sich befinden oder bewegt werden kann.

Bevorzugt ist eine Verwendung wie vorstehend beschrieben oder wie vorstehend als bevorzugt beschrieben, wobei die Kautschukmischung Silika umfasst, wobei der Silika-Anteil der Kautschukmischung bevorzugt im Bereich von 1 phr bis 200 phr liegt und/oder weniger als 0,1 phr Ruß in der Kautschukmischung vorliegen, besonders bevorzugt ist der Silika-Anteil im Bereich von 40 phr bis 190 phr, ganz besonders bevorzugt ist der Silika-Anteil im Bereich von 60 phr bis 180 phr, insbesondere ganz besonders bevorzugt ist der Silika-Anteil im Bereich von 90 phr bis 170 phr.

Ein Vorteil des vorstehend beschriebenen Aspekts der vorliegenden Erfindung ist, dass insbesondere für Silika-Mischungen besonders große Erhöhungen der Dispersion des Silikas und der Verteilung der restlichen Bestandteile in der Kautschukmischung erreicht werden können. Dies gilt umso mehr für Silika Mischungen mit den vorstehend beschriebenen bevorzugten Silika-Anteilen.

Bevorzugt ist eine Verwendung wie vorstehend beschrieben oder wie vorstehend als bevorzugt beschrieben, wobei die Kautschukmischung ein oder mehrere Silane umfasst, wobei der Silan-Anteil der Kautschukmischung bevorzugt im Bereich von 0,01 phr bis 50 phr liegt, besonders bevorzugt ist der Silan-Anteil im Bereich von 0,1 phr bis 40 phr, ganz besonders bevorzugt ist der Silan-Anteil im Bereich von 1 phr bis 30 phr, insbesondere ganz besonders bevorzugt ist der Silan-Anteil im Bereich von 3 phr bis 20 phr.

Ein Vorteil des vorstehend beschriebenen Aspekts der vorliegenden Erfindung ist, dass insbesondere für Silika-Mischungen besonders große Erhöhungen der Verteilung des Silans in der Kautschukmischung erreicht werden können. Dies gilt umso mehr für Silika-Mischungen mit den vorstehend beschriebenen bevorzugten Silan-Anteilen.

Bevorzugt ist eine Verwendung wie vorstehend beschrieben oder wie vorstehend als bevorzugt beschrieben, wobei die Kautschukmischung mindestens einen Kautschuk umfasst ausgewählt aus der Gruppe bestehend aus IIR, EPDM, NR, IR, SBR, SSBR und BR.

Ein Vorteil des vorstehend beschriebenen Aspekts der vorliegenden Erfindung ist, dass insbesondere bei Kautschukmischungen mit den vorstehend beschriebenen Kautschukarten die vorstehend beschriebenen Probleme aus dem Stand der Technik besonders stark auftreten

Bevorzugt ist eine Verwendung wie vorstehend beschrieben oder wie vorstehend als bevorzugt beschrieben, wobei das Volumenverhältnis des zweiten Kammervolumens der Mischkammer des zweiten Mischers zum ersten Kammervolumen der Mischkammer des ersten Mischers im Bereich von 14:1 bis 1,1:1 liegt, bevorzugt im Bereich von 10: 1 bis 1,5:1 liegt, besonders bevorzugt im Bereich von 5:1 bis 2:1.

Ein Vorteil des vorstehend beschriebenen Aspekts der vorliegenden Erfindung ist, dass in Verbindung mit dem vorstehend beschriebenen Verhältnis des besagten ersten Volumenverhältnisses zum besagten zweiten Volumenverhältnis größere Flügelfeldgeschwindigkeiten in der ersten Mischkammer im Vergleich zur zweiten Mischkammer entstehen und somit nicht nur die vorstehend beschriebenen Vorteile bezüglich der Homogenität und der Dispersion verbessert werden, sondern auch größere Mengen an Kautschukmischungen pro Zyklus in einer erfindungsgemäßen Vorrichtung erreicht werden können.

Bevorzugt ist eine Verwendung wie vorstehend beschrieben oder wie vorstehend als bevorzugt beschrieben, wobei das Verhältnis des besagten ersten Volumenverhältnisses zum besagten zweiten Volumenverhältnis im Bereich von 5:1 bis 1:10, bevorzugt im Bereich von 1:1 bis 1:10, besonders bevorzugt im Bereich von 1:1,01 bis 1:10 liegt.

Ein Vorteil des vorstehend beschriebenen Aspekts der vorliegenden Erfindung ist, dass noch größere Mengen an Kautschukmischungen pro Zyklus in einer erfindungsgemäßen Vorrichtung erreicht werden können im Vergleich Volumenverhältnis wie zuvor beschrieben. Zusätzlich und unabhängig von der erreichten Größe der Menge der Kautschukmischung pro Zyklus konnte eine bessere Temperaturkontrolle in der zweiten Mischkammer erreicht werden, wodurch eine noch bessere besagte Homogenität in der Kautschukmischung erreicht werden konnte.

Bevorzugt ist eine Verwendung wie vorstehend beschrieben oder wie vorstehend als bevorzugt beschrieben, wobei jeder erste Rotorflügel sämtlicher Mischrotoren in dem ersten Mischer ein erstes Aspektverhältnis aufweist, wobei das erste Aspektverhältnis gebildet aus der Höhe eines der ersten Rotorflügel, bevorzugt jedes ersten Rotorflügels, zu dem effektiven Durchmesser des besagten einen ersten Rotorflügels, bevorzugt des entsprechenden ersten Rotorflügels sämtlicher ersten Rotorflügels, im Bereich von 50:1 bis 1:10 liegt, bevorzugt im Bereich von 20:1 bis 1,01:1, besonders bevorzugt im Bereich von 15:1 bis 1,1:1, ganz besonders bevorzugt im Bereich von 10:1 bis 2:1, insbesondere ganz besonders bevorzugt im Bereich von 8:1 bis 5: 1, wobei bevorzugt der minimale Abstand zwischen der Rotorflügelspitze eines ersten Rotorflügels, bevorzugt jedes ersten Rotorflügels, zu der Innenwand des ersten Mischers im Bereich von 0,4 bis 2,0 cm liegt, bevorzugt im Bereich von 0,6 cm bis 1,5 cm, besonders bevorzugt im Bereich von 0,7 bis 0,9 cm.

Ein Vorteil des vorstehend beschriebenen Aspekts der vorliegenden Erfindung ist, dass durch die vorstehenden Verhältnisse eine bessere Dispersion der Füllstoff in der aus der ersten Mischkammer resultierenden Kautschukmischung erreicht wird.

Im Rahmen der vorliegenden Erfindung erstreckt sich die Höhe eines Rotorflügels entlang der radialen Richtung des Rotors des besagten Rotorflügels und ist der Abstand von der Außenwand des Rotorkerns bis zur Rotorflügelspitze oder der Außenwand des besagten Rotorflügels, wobei die Höhe eines Rotorflügels bevorzugt dem maximalen Radius eines Rotors, wie er in der vorstehenden Formel 1 definiert ist.

Im Rahmen der vorliegenden Erfindung wird der effektive Durchmesser eines Rotorflügels wie in der folgenden Formel 3 definiert:

$$\text{effektive Durchmesser} = V_{\text{Flügel}} / (\pi r^2) \qquad \text{(Formel 3)},$$

wobei

r = Hälfte der Höhe des betrachteten oder der betrachteten Rotorflügels
und
$V_{\text{Flügel}}$ = Volumen des betrachteten oder der betrachteten Rotorflügel, wobei das Volumen eines quaderförmigen Rotorflügels aus dem Produkt der zueinander orthogonalen Seitenkantenlängen gemäß mathematischer Geometrielehre berechnet wird und das Volumen eines pyramidenstumpfförmigen Rotorflügels aus der Höhe des Rotorflügels, der Grundfläche und der Außenwand des Rotorflügels gemäß mathematischer Geometrielehre berechnet wird. Andere Volumina dreidimensionaler Rotorflügel werden entsprechend ihrer geometrischen Form gemäß mathematischer Geometrielehre berechnet.

Im Rahmen der vorliegenden Erfindung ist die Grundfläche eines bestimmten Rotorflügels eines Rotors die Grenzfläche zwischen dem Rotorkern desselben Rotors und dem bestimmten Rotorflügel des einen Rotors.

Bevorzugt ist eine Verwendung wie vorstehend beschrieben oder wie vorstehend als bevorzugt beschrieben, wobei jeder zweite Rotorflügel sämtlicher Mischrotoren in dem zweiten Mischer ein zweites Aspektverhältnis aufweist, wobei das zweite Aspektverhältnis gebildet aus der Höhe eines der zweiten Rotorflügel, bevorzugt jedes zweiten Rotorflügels, zu dem effektiven Durchmesser des besagten einen zweiten Rotorflügels, bevorzugt des entsprechenden zweiten Rotorflügels sämtlicher zweiten Rotorflügels, im Bereich von 50:1 bis 1: 10 liegt, bevorzugt im Bereich von 20:1 bis 1: 10, besonders bevorzugt im Bereich von 5:1 bis 1:10, ganz besonders bevorzugt im Bereich von 2:1 bis 1:5, insbesondere ganz besonders bevorzugt im Bereich von 1:1 bis 1:2.

Ein Vorteil des vorstehend beschriebenen Aspekts der vorliegenden Erfindung ist, dass durch die vorstehenden Verhältnisse eine bessere Homogenität der aus der zweiten Mischkammer resultierenden Kautschukmischung erreicht wird.

Bevorzugt ist eine Verwendung wie vorstehend beschrieben oder wie vorstehend als bevorzugt beschrieben, wobei das Verhältnis des ersten Aspektverhältnisses zu dem zweiten Aspektverhältnis im Bereich von 100:1 bis 1: 10 liegt, bevorzugt im Bereich von 50:1 bis 1,01:1, besonders bevorzugt im Bereich von 20:1 bis 1,1:1, ganz besonders bevorzugt im Bereich von 20:1 bis 2: 1, insbesondere ganz besonders bevorzugt im Bereich von 10:1 bis 5:1.

Ein Vorteil des vorstehend beschriebenen Aspekts der vorliegenden Erfindung ist, dass im Bereich von 100: 1 bis 1: 10 ausreichend hohe Flügelfeldgeschwindigkeiten bei möglichst großer besagter Homogenität und einer möglichst großen Effizienz wie vorstehend beschrieben in einer erfindungsgemäßen Vorrichtung erreicht werden können. Je kleiner die zweiten Rotorflügel sind und somit je höher jedoch das vorstehend beschriebene Verhältnis, desto die besagte Homogenität der resultierenden Kautschukmischung. Dies gilt insbesondere für Verhältnisse des ersten Aspektverhältnisses zu dem zweiten Aspektverhältnis im Bereich von 100:1 bis 1,01:1, besonders bevorzugt von 100: 1 bis 1,1:1, ganz besonders bevorzugt von 100: 1 bis 2:1, insbesondere ganz besonders bevorzugt von 100: 1 bis 5: 1.

Besonders bevorzugt ist eine Verwendung wie vorstehend beschrieben oder wie vorstehend als bevorzugt beschrieben, wobei das Verhältnis des minimalen Abstandes zwischen der oder sämtlicher Rotorflügelspitzen eines ersten Rotorflügels und der Innenwand des Kammergehäuses des ersten Mischers zu dem minimalen Abstand zwischen der oder sämtlicher Rotorflügelspitzen eines zweiten Rotorflügels und der Innenwand des Kammergehäuses des zweiten Mischers im Bereich von 10:1 bis 1:50, bevorzugt im Bereich von 5:1 bis 1:20, besonders bevorzugt im Bereich von 1:1 bis 1:8, ganz besonders bevorzugt im Bereich von 1:1,1 bis 1:2,

wobei bevorzugt

- der minimale Abstand zwischen der oder sämtlicher Rotorflügelspitzen eines zweiten Rotorflügels und der Innenwand des Kammergehäuses des zweiten Mischers von 0,8 bis 5,0 cm liegt, bevorzugt im Bereich von 1,0 bis 5 cm, besonders bevorzugt im Bereich von 1,0 bis 2,0 cm, ganz besonders bevorzugt im Bereich von 1,2 bis 2,0 cm, und/oder

- der minimale Abstand zwischen der Rotorflügelspitzen eines zweiten Rotorflügels, bevorzugt jedes zweiten Rotorflügels, zu der Außenwand des Mischrotorkern des anderen Mischrotors des zweiten Mischers im Bereich von 1,0 bis 5,0 cm liegt, bevorzugt im Bereich von 1,5 bis 5,0 cm, besonders bevorzugt im Bereich von 1,5 bis 3,0 cm, ganz besonders bevorzugt im Bereich von 2,0 bis 3,0 cm.

Ein Vorteil des vorstehend beschriebenen Aspekts der vorliegenden Erfindung ist, dass die Flügelfeldgeschwindigkeiten in der ersten Mischkammer noch weiter im Vergleich zu den Flügelfeldgeschwindigkeiten in der zweiten Mischkammer erhöht werden. Dies erhöht wie bereits vorstehend beschrieben die besagte Dispersion und/oder die besagte Homogenität noch weiter im Vergleich zu den vorstehend beschriebenen bevorzugten Verwendungen der vorliegenden Erfindung.

Im Rahmen der vorliegenden Erfindung ist der minimale Abstand zwischen der oder sämtlicher Rotorflügelspitzen eines Rotorflügels eines Rotors und der Innenwand des Kammergehäuses, in dem der besagte Rotor mit der besagten einen oder sämtlichen Rotorflügelspitzen angeordnet ist, der kleinste Abstand, den der besagte Rotor bei einer Umdrehung um seine Rotationsachse zum besagten Kammergehäuse aufweist.

Besonders bevorzugt ist auch eine Verwendung wie vorstehend beschrieben oder wie vorstehend als bevorzugt beschrieben, wobei der erste und zweite Mischer jeweils zwei Mischrotoren aufweisen, wobei das Verhältnis

- des minimalen Abstandes zwischen der Rotorflügelspitze eines ersten Rotorflügels, bevorzugt jedes ersten Rotorflügels, eines Mischrotors des ersten Mischers und der Außenwand des Mischrotorkern des anderen Mischrotors des ersten Mischers
- zu dem minimalen Abstand zwischen der Rotorflügelspitze eines zweiten Rotorflügels, bevorzugt jedes zweiten Rotorflügels, eines Mischrotors des zweiten Mischers und der Außenwand des Mischrotorkern des anderen Mischrotors des zweiten Mischers

im Bereich von 50:1 bis 1,01:1, bevorzugt im Bereich von 20:1 bis 1,1:1, besonders bevorzugt im Bereich von 20:1 bis 2:1, ganz besonders bevorzugt im Bereich von 10:1 bis 5:1,
wobei bevorzugt

- der minimale Abstand zwischen der Rotorflügelspitze eines ersten Rotorflügels, bevorzugt jedes ersten Rotorflügels, zu der Außenwand des Mischrotorkern des anderen Mischrotors des ersten Mischers im Bereich von 0,6 bis 2,0 cm liegt, bevorzugt im Bereich von 0,8 cm bis 1,5 cm, besonders bevorzugt im Bereich von 1,0 bis 1,5 cm, ganz besonders bevorzugt im Bereich von 1,2 bis 1,5 cm,
  und/oder
- der minimale Abstand zwischen der Rotorflügelspitzen eines zweiten Rotorflügels, bevorzugt jedes zweiten Rotorflügels, zu der Außenwand des Mischrotorkern des anderen Mischrotors des zweiten Mischers im Bereich von 1,0 bis 5,0 cm liegt, bevorzugt im Bereich von 1,5 bis 5,0 cm, besonders bevorzugt im Bereich von 1,5 bis 3,0 cm, ganz besonders bevorzugt im Bereich von 2,0 bis 3,0 cm.

Im Rahmen der vorliegenden Erfindung ist der minimale Abstand zwischen einer Rotorflügelspitze in einer Mischkammer zu der Außenwand des Mischrotorkern des anderen Mischrotors derselben Mischkammer der kleinste Abstand, den die besagte Rotorflügelspitze bei einer Umdrehung um die Rotationsachse des Rotors zu der Außenwand des Mischrotorkern des anderen Mischrotors aufweist.

Ein Vorteil des vorstehend beschriebenen Aspekts der vorliegenden Erfindung ist, dass die Flügelfeldgeschwindigkeiten in der ersten Mischkammer noch weiter im Vergleich zu den Flügelfeldgeschwindigkeiten in der zweiten Mischkammer erhöht werden, da nun vorstehend auch die Flügelfeldgeschwindigkeiten welche zwischen den verschiedenen Rotoren einer Mischkammer wirken, zusätzlich zu den Flügelfeldgeschwindigkeiten zwischen den einzelnen Rotoren und der Innenwand des Kammergehäuses des entsprechenden Mischers berücksichtigt wurden. Dies erhöht die besagte Dispersion und/oder die besagte Homogenität noch weiter im Vergleich zu den vorstehend als bevorzugt beschriebenen oder als besonders bevorzugt beschriebenen Verwendungen der vorliegenden Erfindung.

Bevorzugt ist eine Verwendung wie vorstehend beschrieben oder wie vorstehend als bevorzugt beschrieben, wobei sämtliche Mischrotoren des ersten Mischers ineinandergreifende Rotoren sind und/oder sämtliche Mischrotoren des zweiten Mischers ineinandergreifende Rotoren sind.

Ein Vorteil des vorstehend beschriebenen Aspekts der vorliegenden Erfindung ist, dass dadurch in dem vorstehend beschriebenen ersten Mischer noch höhere Flügelfeldgeschwindigkeiten erreicht werden können, während in der dem zweiten Mischer eine noch bessere Verteilung der Bestandteile in der Kautschukmischung und somit eine noch höhere Homogenität wie vorstehend beschrieben erreicht werden kann

Bevorzugt ist eine Verwendung wie vorstehend beschrieben oder wie vorstehend als bevorzugt beschrieben, wobei

- der erste Mischer einen Stempel und/oder der zweite Mischer keinen Stempel aufweist
  und/oder

- der erste Mischer ein Obermischer und der zweite Mischer ein Untermischer eines Tandemmischers sind.

Ein Vorteil des vorstehend beschriebenen Aspekts der vorliegenden Erfindung ist, dass die erfindungsgemäße Vorrichtung ein Tandemmischer ist und somit eine deutliche Reduzierung der Bescheid pro Zyklus erreicht wird, bei der im Rahmen der vorliegenden Erfindung besonders große Erhöhungen der besagten Homogenität und/oder der besagten Dispersion erreicht werden.

In besonders hohem Maße bevorzugt ist eine Verwendung wie vorstehend beschrieben, wobei die Vorrichtung zum Durchführen eines Verfahrens nach einem der vorangehenden Ansprüchen geeignet ist und die folgenden Komponenten umfasst:

- einen ersten Mischer umfassend eine Mischkammer mit mindestens einem ersten Mischrotor, wobei die Mischkammer des ersten Mischers

  - ein erstes Kammervolumen aufweist
    und
  - von einem Kammergehäuse, einer ersten Einfüllöffnung und einer ersten Auswurföffnung begrenzt wird,

  wobei jeder der mindestens eine ersten Mischrotoren einen Mischerrotorkern und zumindest zwei erste Rotorflügel aufweist, wobei das Verhältnis des Gesamtvolumens sämtlicher erster Rotorflügel sämtlicher erster Mischrotoren zu dem Mischvolumen der Mischkammer des ersten Mischers ein erstes Volumenverhältnis darstellt,
  und
- einen zweiten Mischer umfassend eine Mischkammer mit mindestens einem zweiten Mischrotor, wobei die Mischkammer des zweiten Mischers

  - ein zweites Kammervolumen aufweist
    und
  - von einem Kammergehäuse, einer zweiten Einfüllöffnung und einer zweiten Auswurföffnung begrenzt wird,

  wobei der mindestens eine zweite Mischrotor einen Mischerrotorkern und zumindest zwei zweite Rotorflügel aufweisen, wobei das Verhältnis des Gesamtvolumens sämtlicher zweiter Rotorflügel sämtlicher zweiter Mischrotoren zu dem Mischvolumen der Mischkammer des zweiten Mischers ein zweites Volumenverhältnis darstellt, wobei das Volumenverhältnis des zweiten Kammervolumens der Mischkammer des zweiten Mischers zum ersten Kammervolumen der Mischkammer des ersten Mischers im Bereich von 5:1 bis 1,1:1 liegt,

dadurch gekennzeichnet, dass
das Verhältnis des besagten ersten Volumenverhältnisses zum besagten zweiten Volumenverhältnis im Bereich von 10:1 bis 2:1 liegt, wobei

- jeder erste Rotorflügel sämtlicher Mischrotoren in dem ersten Mischer ein erstes Aspektverhältnis aufweist, wobei das erste Aspektverhältnis gebildet aus der Höhe eines der ersten Rotorflügel zu dem effektiven Durchmesser des besagten einen ersten Rotorflügels im Bereich von 10:1 bis 2:1 liegt,
- jeder zweite Rotorflügel sämtlicher Mischrotoren in dem zweiten Mischer ein zweites Aspektverhältnis aufweist, wobei das zweite Aspektverhältnis gebildet aus der Höhe eines der zweiten Rotorflügel zu dem effektiven Durchmesser des besagten einen zweiten Rotorflügels im Bereich von 1:1 bis 1:5 liegt,
- das Verhältnis des ersten Aspektverhältnisses zu dem zweiten Aspektverhältnis im Bereich von 20:1 bis 1,01:1 liegt,
- das Verhältnis des minimalen Abstandes zwischen der Rotorflügelspitze eines ersten Rotorflügels und der Innenwand des Kammergehäuses des ersten Mischers zu dem minimalen Abstand zwischen der Rotorflügelspitze eines zweiten Rotorflügels und der Innenwand des Kammergehäuses des ersten Mischers im Bereich von 20:1 bis 1,1:1,
- der erste und zweite Mischer jeweils zwei Mischrotoren aufweisen, wobei das Verhältnis des minimalen Abstandes zwischen der Rotorflügelspitze eines ersten Rotorflügels eines Mischrotors des ersten Mischers und der Außenwand des Mischrotorkern des anderen Mischrotors des ersten Mischers zu dem minimalen Abstand zwischen der Rotorflügelspitze eines zweiten Rotorflügels eines Mischrotors des zweiten Mischers und der Außenwand des Mischrotorkern des anderen Mischrotors des zweiten Mischers im Bereich von 20:1 bis 1,1:1,
- die ersten Rotorflügel ineinandergreifende Rotoren sind und die zweiten Rotorflügel der zwei Untermischerrotoren ineinandergreifende Rotoren sind,
- der erste Mischer einen Stempel und der zweite Mischer keinen Stempel aufweist und
- der erste Mischer ein Obermischer und der zweite Mischer ein Untermischer eines Tandemmischers sind.

Im Folgenden wird die vorliegende Erfindung anhand weiterer Aspekte beschrieben. Die vorstehend beschriebenen vorteilhaften Ausführungen einer erfindungsgemäßen Verwendung und eines erfindungsgemäßen Verfahrens gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Ausführungen einer erfindungsgemäßen Verwendung und eines erfindungsgemäßen Verfahrens, wobei sowohl der Begriff "Obermischer" mit dem Ausdruck "erster Mischer" als auch der Begriff "Untermischer" mit dem Ausdruck "zweiter Mischer" synonym ist.

1. Aspekt:

1. Vorrichtung zum Herstellen einer Kautschukmischung, umfassend

- einen Obermischer mit zumindest zwei Obermischerrotoren, wobei der Obermischer von einem Oberkammergehäuse, einer ersten Einfüllöffnung und einer ersten Auswurföffnung begrenzt wird, wobei die Obermischerrotoren einen Obermischerrotorkern und zumindest zwei erste Rotorflügel aufweisen, wobei das Verhältnis des Gesamtvolumens sämtlicher erster Rotorflügel zu dem effektiven Volumen des Oberkammergehäuses ein erstes Volumenverhältnis darstellt,
und
- einen Untermischer mit zumindest zwei Untermischerrotoren, wobei der Untermischer von einem Unterkammergehäuse, einer zweiten Einfüllöffnung und einer zweiten Auswurföffnung begrenzt wird, wobei die Untermischerrotoren einen Untermischerrotorkern und zumindest zwei zweite Rotorflügel aufweisen, wobei das Verhältnis des Gesamtvolumens sämtlicher zweiter Rotorflügel zu dem effektiven Volumen des Unterkammergehäuses ein zweites Volumenverhältnis darstellt,

dadurch gekennzeichnet, dass
das Verhältnis des besagten ersten Volumenverhältnisses zum besagten zweiten Volumenverhältnis im Bereich von 50:1 bis 1:10 liegt, bevorzugt im Bereich von 20:1 bis 1:1 liegt, bevorzugt im Bereich von 15:1 bis 1,1:1 liegt, besonders bevorzugt im Bereich von 10:1 bis 2:1.

2. Vorrichtung nach Aspekt 1, wobei das Verhältnis des zweiten Kammervolumens der Mischkammer des zweiten Mischers zum ersten Kammervolumen der Mischkammer des ersten Mischers im Bereich von 15:1 bis 1:1 liegt, bevorzugt im Bereich von 14:1 bis 1,1:1 liegt, besonders bevorzugt im Bereich von 10:1 bis 1,5:1 liegt, ganz besonders bevorzugt im Bereich von 5:1 bis 2:1.

3. Vorrichtung nach einem der vorangehenden Aspekte, wobei

- ein erstes Aspektverhältnis gebildet aus der Höhe eines der ersten Rotorflügel zu dem effektiven Durchmesser des besagten einen ersten Rotorflügels im Bereich von 50:1 bis 1:10 liegt, bevorzugt im Bereich von 20:1 bis 1,01:1, besonders bevorzugt im Bereich von 15:1 bis 1,1:1, ganz besonders bevorzugt im Bereich von 10:1 bis 2:1, insbesondere ganz besonders bevorzugt im Bereich von 8:1 bis 5:1,
und/oder
- ein zweites Aspektverhältnis gebildet aus der Höhe eines der zweiten Rotorflügel zu dem effektiven Durchmesser des besagten einen zweiten Rotorflügels im Bereich von 50:1 bis 1: 10 liegt, bevorzugt im Bereich von 20:1 bis 1: 10, besonders bevorzugt im Bereich von 5:1 bis 1: 10, ganz besonders bevorzugt im Bereich von 2:1 bis 1:5, insbesondere ganz besonders bevorzugt im Bereich von 1:1 bis 1:2.

4. Vorrichtung nach einem der vorangehenden Aspekte, wobei das Verhältnis des ersten Aspektverhältnisses zu dem zweiten Aspektverhältnis im Bereich von 100:1 bis 1: 10 liegt, bevorzugt im Bereich von 50:1 bis 1,01:1, besonders bevorzugt im Bereich von 20:1 bis 1,1:1, ganz besonders bevorzugt im Bereich von 20:1 bis 2: 1, insbesondere ganz besonders bevorzugt im Bereich von 10:1 bis 5:1.

5. Vorrichtung nach einem der vorangehenden Aspekte, wobei das Verhältnis des minimalen Abstandes zwischen der Rotorflügelspitze eines ersten Rotorflügels und der Innenwand des Oberkammergehäuses zu dem minimalen Abstand zwischen der Rotorflügelspitze eines zweiten Rotorflügels und der Innenwand des Unterkammergehäuses im Bereich von 10:1 bis 1:50, bevorzugt im Bereich von 5:1 bis 1:20, besonders bevorzugt im Bereich von 1:1 bis 1:8, ganz besonders bevorzugt im Bereich von 1:1,1 bis 1:2.

6. Vorrichtung nach einem der vorangehenden Aspekte, wobei das Verhältnis des minimalen Abstandes zwischen der Rotorflügelspitze eines ersten Rotorflügels und der Außenwand des Obermischerrotorkerns zu dem minimalen Abstand zwischen der Rotorflügelspitze eines zweiten Rotorflügels und der Außenwand des Untermischerrotorkerns im Bereich von 50:1 bis 1,01:1, bevorzugt im Bereich von 20:1 bis 1,1:1, besonders bevorzugt im Bereich von 20:1 bis 2: 1, ganz besonders bevorzugt im Bereich von 10:1 bis 5:1.

7. Vorrichtung nach einem der vorangehenden Aspekte, wobei die Rotorflügel der zwei Obermischerrotoren ineinandergreifende Rotoren sind und/oder die Rotorflügel der zwei Untermischerrotoren ineinandergreifende Rotoren sind.

8. Vorrichtung nach einem der vorangehenden Aspekte, wobei die Vorrichtung eine Zuführeinheit zum Zuführen von Kautschukmischungsbestandteilen in das Unterkammergehäuse aufweist, bevorzugt eine Zuführeinheit zum Zuführen von Vulkanisationsmitteln in das Unterkammergehäuse.

9. Vorrichtung nach einem der vorangehenden Aspekte, wobei

- der Obermischer einen Stempel aufweist und/oder der Untermischer keinen Stempel aufweist und/oder
- der erste Mischer ein Obermischer und der zweite Mischer ein Untermischer eines Tandemmischers sind.

10. Verfahren zur Herstellung unvulkanisierter Fahrzeugreifenbauteile und/oder eines Fahrzeugreifens, umfassend die folgenden Schritte:

A) Herstellen oder Bereitstellen von Kautschukmischungsbestandteilen,
B) Mischen der in Schritt A) her- und/oder bereitgestellten Kautschukmischungsbestandteile in dem Obermischer einer Vorrichtung nach einem der vorangehenden Aspekte zu einer Kautschukgrundmischung,
C) Mischen der in Schritt B) hergestellten Kautschukgrundmischung mit Vulkanisationsmitteln und optional weiteren Kautschukmischungsbestandteile in dem Untermischer einer Vorrichtung nach einem der vorangehenden Aspekte, sodass eine Kautschukfertigmischung entsteht,
D) Ausformen und Zuschneiden der Kautschukfertigmischung, sodass unvulkanisierte Fahrzeugreifenbauteils entstehen
und optional
E) Vulkanisieren eines oder mehrere der Fahrzeugreifenbauteile zusammen mit weiteren Reifenbauteilen, sodass ein Fahrzeugreifen entsteht.

11. Verwendung der Vorrichtung nach einem der vorangehenden Aspekte zur Herstellung einer Kautschukfertigmischung oder eines Fahrzeugreifenbauteils.

**Figurenbeschreibung:**

Es zeigt:

Figur 1:    Eine perspektivische Ansicht eines Rotors einer erfindungsgemäßen Vorrichtung, wobei in Figur 1 zwei Schnitte A-A und B-B eingezeichnet sind;
Figur 2:    Eine Querschnittansicht entlang des Schnittes A-A der in Figur 1 gezeigten erfindungsgemäßen Vorrichtung;
Figur 3:    Eine Querschnittansicht entlang des Schnittes B-B der in Figur 1 gezeigten erfindungsgemäßen Vorrichtung.

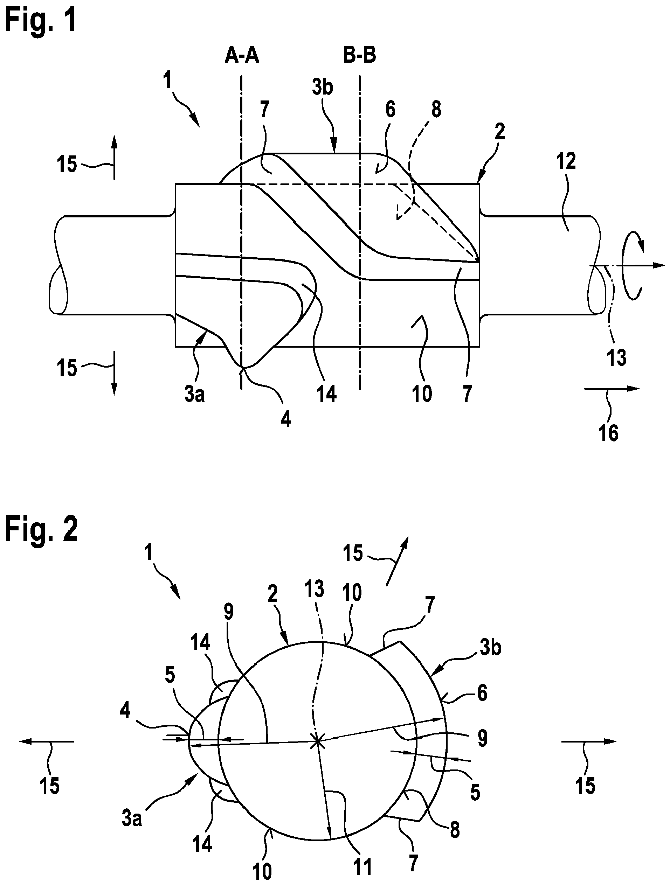

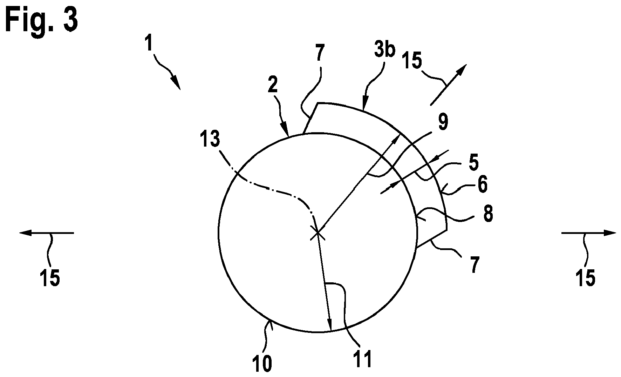

Figur 1 zeigt einen Rotor wie er in der grob in Figur 3 des Dokumentes DE 4129108 A1 dargestellt ist. Anhand des in Figur 1 schematisch dargestellte Rotors 1 sollen die verschiedenen Aspekte der vorliegenden Erfindung beispielhaft näher beschrieben werden. Der in Figur 1 schematisch dargestellte Rotors 1 weist eine Achse 12, eine Drehachse 13, einen Mischerrotorkern 2 mit einer Außenfläche 10 und zwei Rotorflügel 3a, 3b aufweisen. Der in radiale Richtung 15 spitzzulaufende Rotorflügel 3a weist eine eindeutige Rotorflügelspitze 4 und eine Schweißnaht 14 auf. Der pyramidenstumpfähnliche Rotorflügel 3b weist eine Außenwand 6 mit einer Außenfläche, eine Grundfläche 8 und eine mehrere Seitenwände 7 auf, wobei die Grundfläche 8 des Rotorflügels 3b des Rotors 1 die Fläche ist, welche an dem Rotorkern 2 des Rotors 1 anliegt.
Im Rahmen der vorliegenden Erfindung entspricht die Außenfläche der Außenwand des Rotorflügels bei halbkreisförmigen oder dazu ähnlichförmigen Rotorflügeln genau der Fläche, welche an die auf der besagten Außenfläche liegenden Linie, welche den geringsten Abstand zur Innenwand des Kammergehäuses aufweist, angrenzt und nur einen bis zu 0,5 mm größeren Abstand zur Innenwand des Kammergehäuses als diese besagte Linie aufweist.

Figur 2 zeigt eine schematisch dargestellte Querschnittansicht entlang des Schnittes A-A der in Figur 1 gezeigten erfindungsgemäßen Vorrichtung. Der in Figur 2 gezeigte Rotor 1 weist eine Drehachse 13, einen Mischerrotorkern 2 mit einer Außenfläche 10 und mit einem Radius 11 und zwei Rotorflügel 3a, 3b aufweisen. Der spitzzulaufende Rotorflügel 3a weist eine eindeutige Rotorflügelspitze 4 und eine Schweißnaht 14 sowie eine Höhe 5 auf. Der pyramidenstumpfähnliche Rotorflügel 3b weist eine Außenwand 6 mit einer Außenfläche, eine Grundfläche 8 und eine mehrere Seitenwände 7 sowie eine Höhe 5 auf, wobei die Grundfläche 8 des Rotorflügels 3b des Rotors 1 die Fläche ist, welche an dem Rotorkern 2 des Rotors 1 anliegt. Der maximale Radius 9 des Rotors 2 erstreckt sich in radiale Richtung 15 von der Drehachse zur Rotorflügelspitze 4 des Rotorflügels 3a und in radiale Richtung 15 von der Drehachse zur Außenfläche 10 des Rotorflügels 3b.

Figur 3 zeigt eine schematisch dargestellte Querschnittansicht entlang des Schnittes B-B der in Figur 1 gezeigten erfindungsgemäßen Vorrichtung. Der in Figur 2 gezeigte Rotor 1 weist eine Drehachse 13, einen Mischerrotorkern 2 mit einer Außenfläche 10 und mit einem Radius 11 und den Rotorflügel 3b aufweisen. Der pyramidenstumpfähnliche Rotorflügel 3b weist eine Außenwand 6 mit einer Außenfläche, eine Grundfläche 8 und eine mehrere Seitenwände 7 sowie eine Höhe 5 auf, wobei die Grundfläche 8 des Rotorflügels 3b des Rotors 1 die Fläche ist, welche an dem Rotorkern 2 des Rotors 1 anliegt. Der maximale Radius 9 des Rotors 2 erstreckt sich in radiale Richtung 15 von der Drehachse zur Außenfläche 10 des Rotorflügels 3b.

**Bezugszeichenliste:**

| 1 | Mischrotor |
|---|---|
| 2 | Mischrotorkern; Rotorkern |
| 3a | spitzzulaufender Rotorflügel mit eindeutiger Rotorflügelspitze |
| 3b | pyramidenstumpfähnlicher Rotorflügel mit Außenfläche, auf der der maximale Radius des Rotors liegt; |
| 4 | Rotorflügelspitze eines Rotorflügels; radial äußerster Punkt des Rotorflügels |
| 5 | Höhe eines Rotorflügels |
| 6 | Außenwand oder Außenfläche des Rotorflügels; Außenfläche, auf der der maximale Radius eines Rotors liegt |
| 7 | Seitenwand des Rotorflügels |
| 8 | Grundfläche des Rotorflügels |
| 9 | maximaler Radius eines Rotors |
| 10 | Außenfläche oder Fläche der Außenwand des Mischrotorkern |
| 11 | Radius des Rotorkerns |
| 12 | Rotorachse |
| 13 | Drehachse des Rotors |
| 14 | Schweißnaht |
| 15 | radiale Richtung; senkrecht zur axialen Richtung |
| 16 | axiale Richtung; senkrecht zur radialen Richtung |

**Patentansprüche**

1. Verfahren zur Herstellung einer Kautschukmischung, umfassend die folgenden Schritte:

A) Mischen einer Kautschukmischung in einem ersten Mischer, wobei der erste Mischer eine Mischkammer und mindestens einen Mischrotor in der Mischkammer des ersten Mischers aufweist, wobei

i. die Mischkammer des ersten Mischers ein erstes Kammervolumen aufweist,
ii. die Mischkammer des ersten Mischers von einem Kammergehäuse, einer ersten Einfüllöffnung und einer ersten Auswurföffnung begrenzt wird
und
iii. der mindestens eine Mischrotor (1) des ersten Mischers einen Mischrotorkern (2) und zumindest zwei erste Rotorflügel (3a, 3b) aufweist,

B) Überführen der im ersten Mischer angemischten Kautschukmischung in einen zweiten Mischer, wobei der zweite Mischer eine Mischkammer und mindestens einen Mischrotor (1) in der Mischkammer des zweiten Mischers aufweist, wobei

i. die Mischkammer des zweiten Mischers von einem Kammergehäuse, einer zweiten Einfüllöffnung und einer zweiten Auswurföffnung begrenzt wird,

ii. die Mischkammer des zweiten Mischers ein zweites Kammervolumen aufweist, wobei das Volumenverhältnis des Kammervolumens der Mischkammer des zweiten Mischers zum Kammervolumen der Mischkammer des ersten Mischers im Bereich von 15:1 bis 1:1 liegt, und

iii. der mindestens eine Mischrotor (1) des zweiten Mischers einen Mischrotorkern (2) und zumindest zwei zweite Rotorflügel (3a, 3b) aufweist,

C) Mischen der im ersten Mischer angemischten Kautschukmischung in dem zweiten Mischer, wobei die auf die Kautschukmischung während Schritt C) wirkenden Flügelfeldgeschwindigkeiten in der Mischkammer des zweiten Mischers kleiner sind als die auf die Kautschukmischung während Schritt A) Flügelfeldgeschwindigkeiten in der Mischkammer des ersten Mischers.

2. Verfahren nach Anspruch 1, wobei

- das Verhältnis der auf die Kautschukmischung während Schritt A) wirkenden Flügelfeldgeschwindigkeiten in der Mischkammer des ersten Mischers zu den auf die Kautschukmischung während Schritt C) wirkenden Flügelfeldgeschwindigkeiten in der Mischkammer des zweiten Mischers im Bereich von 1 000 000:1 bis 1,01:1 liegt, bevorzugt im Bereich von 100 000:1 bis 5:1, besonders bevorzugt im Bereich von 10 000:1 bis 10:1, ganz besonders bevorzugt im Bereich von 500:1 bis 100, und/oder

- die auf die Kautschukmischung während Schritt A) wirkenden Flügelfeldgeschwindigkeiten in der Mischkammer des ersten Mischers im Bereich von 10 m/s bis 300 m/s liegt, bevorzugt im Bereich von 20 m/s bis 200 m/s, besonders bevorzugt im Bereich von 30 m/s bis 150 m/s, ganz besonders bevorzugt im Bereich von 40 m/s bis 100 m/s, und/oder

- die auf die Kautschukmischung während Schritt C) wirkenden Flügelfeldgeschwindigkeiten in der Mischkammer des zweiten Mischers im Bereich von 1 m/s bis 80 m/s liegt, bevorzugt im Bereich von 3 m/s bis 50 m/s, besonders bevorzugt im Bereich von 3 m/s bis 30 m/s, ganz besonders bevorzugt im Bereich von 5 m/s bis 30 m/s.

3. Verfahren nach einem der vorangehenden Ansprüchen, wobei der zweite Mischer eine Zuführeinheit zum Zuführen von Kautschukmischungsbestandteilen in das Unterkammergehäuse aufweist, bevorzugt eine Zuführeinheit zum Zuführen von Vulkanisationsmitteln die Mischkammer des zweiten Mischers, wobei zwischen den Schritten A) und C) oder während des Schrittes A) und/oder C) Vulkanisationsmitteln die Mischkammer des zweiten Mischers überführt werden, sodass eine unvulkanisierte Kautschukfertigmischung in Schritt C) entsteht.

4. Verwendung einer Vorrichtung zum Durchführen eines Verfahrens nach einem der vorangehenden Ansprüche, wobei die Vorrichtung zur Herstellung einer Kautschukmischung geeignet ist und die folgenden Komponenten umfasst:

- einen ersten Mischer umfassend eine Mischkammer mit mindestens einem ersten Mischrotor (1), wobei die Mischkammer des ersten Mischers

- ein erstes Kammervolumen aufweist und
- von einem Kammergehäuse, einer ersten Einfüllöffnung und einer ersten Auswurföffnung begrenzt wird,

wobei jeder der mindestens eine ersten Mischrotoren (1) einen Mischerrotorkern (2) und zumindest zwei erste Rotorflügel (3a, 3b) aufweist, wobei das Verhältnis des Gesamtvolumens sämtlicher erster Rotorflügel (3a, 3b) sämtlicher erster Mischrotoren (1) zu dem Mischvolumen der Mischkammer des ersten Mischers (1) ein erstes Volumenverhältnis darstellt, und

- einen zweiten Mischer umfassend eine Mischkammer mit mindestens einem zweiten Mischrotor (1), wobei die Mischkammer des zweiten Mischers

- ein zweites Kammervolumen aufweist und
- von einem Kammergehäuse, einer zweiten Einfüllöffnung und einer zweiten Auswurföffnung begrenzt wird,

wobei der mindestens eine zweite Mischrotor (1) einen Mischerrotorkern (2) und zumindest zwei zweite Rotorflügel (3a, 3b) aufweisen, wobei das Verhältnis des Gesamtvolumens sämtlicher zweiter Rotorflügel (3a, 3b) sämtlicher zweiter Mischrotoren (1) zu dem Mischvolumen der Mischkammer des zweiten Mischers ein zweites Volumenverhältnis darstellt, wobei das Verhältnis des zweiten Kammervolumens der Mischkammer des zweiten Mischers zum ersten Kammervolumen der Mischkammer des ersten Mischers im Bereich von 15:1 bis 1:1 liegt,

**dadurch gekennzeichnet, dass**
das Verhältnis des besagten ersten Volumenverhältnisses zum besagten zweiten Volumenverhältnis im Bereich von 50:1 bis 1:10 liegt, bevorzugt im Bereich von 20:1 bis 1:1 liegt, bevorzugt im Bereich von 15:1 bis 1,1:1 liegt, besonders bevorzugt im Bereich von 10:1 bis 2:1.

5. Verwendung nach Anspruch 4 oder Verfahren nach einem der vorangehenden Ansprüchen 1 bis 3, wobei die Kautschukmischung Silika umfasst, wobei der Silika-Anteil der Kautschukmischung bevorzugt im Bereich von 1 phr bis 200 phr liegt und/oder weniger als 0,1 phr Ruß in der Kautschukmischung vorliegen, besonders bevorzugt ist der Silika-Anteil im Bereich von 40 phr bis 190 phr, ganz besonders bevorzugt ist der Silika-Anteil im Bereich von 60 phr bis 180 phr, insbesondere ganz besonders bevorzugt ist der Silika-Anteil im Bereich von 90 phr bis 170 phr.

6. Verwendung nach einem der vorangehenden Ansprüchen 4 bis 5 oder Verfahren nach einem der vorangehenden Ansprüchen 1 bis 3, wobei die Kautschukmischung ein oder mehrere Silane umfasst, wobei der Silan-Anteil der Kautschukmischung bevorzugt im Bereich von 0,01 phr bis 50 phr liegt, besonders bevorzugt ist der Silan-Anteil im Bereich von 0,1 phr bis 40 phr, ganz besonders bevorzugt ist der Silan-Anteil im Bereich von 1 phr bis 30 phr, insbesondere ganz besonders bevorzugt ist der Silan-Anteil im Bereich von 3 phr bis 20 phr.

7. Verwendung nach einem der vorangehenden Ansprüchen 4 bis 6 oder Verfahren nach einem der vorangehenden Ansprüchen 1 bis 3, wobei die Kautschukmischung mindestens einen Kautschuk umfasst ausgewählt aus der Gruppe bestehend aus IIR, EPDM, NR, IR, SBR, SSBR und BR.

8. Verwendung nach einem der vorangehenden Ansprüchen 4 bis 7 oder Verfahren nach einem der vorangehenden Ansprüchen 1 bis 3, wobei das Volumenverhältnis des zweiten Kammervolumens der Mischkammer des zweiten Mischers zum ersten Kammervolumen der Mischkammer des ersten Mischers im Bereich von 14:1 bis 1,1: 1 liegt, bevorzugt im Bereich von 10: 1 bis 1,5:1 liegt, besonders bevorzugt im Bereich von 5:1 bis 2:1.

9. Verwendung nach einem der vorangehenden Ansprüchen 4 bis 8 oder Verfahren nach einem der vorangehenden Ansprüchen 1 bis 3, wobei das Verhältnis des besagten ersten Volumenverhältnisses zum besagten zweiten Volumenverhältnis im Bereich von 5:1 bis 1: 10, bevorzugt im Bereich von 1:1 bis 1: 10, besonders bevorzugt im Bereich von 1:1,01 bis 1:10 liegt.

10. Verwendung nach einem der vorangehenden Ansprüchen 4 bis 9 oder Verfahren nach einem der vorangehenden Ansprüchen 1 bis 3, wobei

- mindestens ein erster Rotorflügel (3a, 3b) oder jeder erste Rotorflügel (3a, 3b) sämtlicher Mischrotoren (1) in dem ersten Mischer ein erstes Aspektverhältnis aufweist, wobei das erste Aspektverhältnis gebildet aus der Höhe eines der ersten Rotorflügel (3a, 3b) zu dem effektiven Durchmesser des besagten einen ersten Rotorflügels (3a, 3b) im Bereich von 50:1 bis 1:10 liegt, bevorzugt im Bereich von 20:1 bis 1,01:1, besonders bevorzugt im Bereich von 15:1 bis 1,1:1, ganz besonders bevorzugt im Bereich von 10:1 bis 2:1, insbesondere ganz besonders bevorzugt im Bereich von 8:1 bis 5:1,
und/oder
- mindestens ein zweiter Rotorflügel (3a, 3b) oder jeder zweite Rotorflügel (3a, 3b) sämtlicher Mischrotoren (1) in dem zweiten Mischer ein zweites Aspektverhältnis aufweist, wobei das zweite Aspektverhältnis gebildet aus der Höhe eines der zweiten Rotorflügel (3a, 3b) zu dem effektiven Durchmesser des besagten einen zweiten Rotorflügels (3a, 3b) im Bereich von 50:1 bis 1:10 liegt, bevorzugt im Bereich von 20:1 bis 1:10, besonders bevorzugt im Bereich von 5:1 bis 1:10, ganz besonders bevorzugt im Bereich von 2:1 bis 1:5, insbesondere ganz besonders bevorzugt im Bereich von 1:1 bis 1:2.

11. Verwendung nach einem der vorangehenden Ansprüchen 4 bis 10 oder Verfahren nach einem der vorangehenden Ansprüchen 1 bis 3, wobei das Verhältnis des ersten Aspektverhältnisses zu dem zweiten Aspektverhältnis im Bereich von 100: 1 bis 1: 10 liegt, bevorzugt im Bereich von 50:1 bis 1,01:1, besonders bevorzugt im Bereich von 20:1 bis 1,1:1, ganz besonders bevorzugt im Bereich von 20:1 bis 2:1, insbesondere ganz besonders bevorzugt im Bereich von 10:1 bis 5:1.

**12.** Verwendung nach einem der vorangehenden Ansprüchen 4 bis 11 oder Verfahren nach einem der vorangehenden Ansprüchen 1 bis 3, wobei das Verhältnis des minimalen Abstandes zwischen der Rotorflügelspitze (4) eines ersten Rotorflügels (3a, 3b) und der Innenwand des Kammergehäuses des ersten Mischers zu dem minimalen Abstand zwischen der Rotorflügelspitze (4) eines zweiten Rotorflügels (3a, 3b) und der Innenwand des Kammergehäuses des zweiten Mischers im Bereich von 10: 1 bis 1:50, bevorzugt im Bereich von 5:1 bis 1:20, besonders bevorzugt im Bereich von 1:1 bis 1:8, ganz besonders bevorzugt im Bereich von 1:1,1 bis 1:2.

**13.** Verwendung nach einem der vorangehenden Ansprüchen 4 bis 12 oder Verfahren nach einem der vorangehenden Ansprüchen 1 bis 3, wobei der erste und zweite Mischer jeweils zwei Mischrotoren (1) aufweisen, wobei das Verhältnis des minimalen Abstandes zwischen der Rotorflügelspitze (4) eines ersten Rotorflügels (3a, 3b) eines Mischrotors (1) des ersten Mischers und der Außenwand (10) des Mischrotorkern (2) des anderen Mischrotors (1) des ersten Mischers zu dem minimalen Abstand zwischen der Rotorflügelspitze (4) eines zweiten Rotorflügels (3a, 3b) eines Mischrotors (1) des zweiten Mischers und der Außenwand (10) des Mischrotorkern (2) des anderen Mischrotors (1) des zweiten Mischers im Bereich von 50:1 bis 1,01: 1, bevorzugt im Bereich von 20:1 bis 1,1:1, besonders bevorzugt im Bereich von 20:1 bis 2:1, ganz besonders bevorzugt im Bereich von 10:1 bis 5:1.

**14.** Verwendung nach einem der vorangehenden Ansprüchen 4 bis 13 oder Verfahren nach einem der vorangehenden Ansprüchen 1 bis 3, wobei sämtliche Mischrotoren (1) des ersten Mischers ineinandergreifende Rotoren sind und/oder sämtliche Mischrotoren (1) des zweiten Mischers ineinandergreifende Rotoren sind.

**15.** Verwendung nach einem der vorangehenden Ansprüchen 4 bis 14 oder Verfahren nach einem der vorangehenden Ansprüchen 1 bis 3, wobei

- der erste Mischer einen Stempel und/oder der zweite Mischer keinen Stempel aufweist
und/oder
- der erste Mischer ein Obermischer und der zweite Mischer ein Untermischer eines Tandemmischers sind.

Fig. 1

Fig. 2

**Fig. 3**

Europäisches
Patentamt

European
Patent Office

Office européen
des brevets

# EUROPÄISCHER RECHERCHENBERICHT

**Nummer der Anmeldung**

EP 20 18 4888

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | US 2014/200307 A1 (CIE GÉNÉRALE DES ETABLISSEMENTS MICHELIN [FR] ET AL) 17. Juli 2014 (2014-07-17) * Absätze [0002] - [0010], [0023], [0059] - [0073], [0077], [0084], [0088], [0092], [0096] * * Ansprüche 1-9; Abbildung 3 * * Zusammenfassung * ----- | 1-15 | INV. B29B7/18 B29B7/74 B29B7/28 |
| A | CN 207 630 307 U (SICHUAN UNFIRE POLYMER MATERIALS TECH CO LTD [CN]) 20. Juli 2018 (2018-07-20) * Ansprüche 1-3; Abbildungen 1,2 * ----- | 1-15 | |
| A | CN 209 699 635 U (NANJING YATONG RUBBER PLASTICS COMPANY LTD [CN]) 29. November 2019 (2019-11-29) * Abbildung 1 * ----- | 1-15 | |
| A,D | DE 41 29 108 A1 (CONTINENTAL AG [DE] ET AL) 4. März 1993 (1993-03-04) * Ansprüche 1-13; Abbildungen 1-3 * * Zusammenfassung * ----- | 1-15 | RECHERCHIERTE SACHGEBIETE (IPC) B29B B29C B01F |
| A | EP 1 382 425 A2 (CONTINENTAL AG [DE] ETAL) 21. Januar 2004 (2004-01-21) * Ansprüche 1-18; Abbildung 1 * * Zusammenfassung * ----- | 1-15 | |
| T | PETER J [DE] ET AL: "TANDEM-MISCHVERFAHREN, TEIL 4", KAUTSCHUK + GUMMI KUNSTSTOFFE, HÜTHIG VERLAG HEIDELBERG [DE], Bd. 46, Nr. 7, 1. Juli 1993 (1993-07-01), Seiten 545-549, XP000384143, ISSN: 0948-3276 * das ganze Dokument * ----- -/-- | | |

Der vorliegende Recherchenbericht wurde für alle Patentansprüche erstellt

| Recherchenort | Abschlußdatum der Recherche | Prüfer |
|---|---|---|
| München | 16. November 2020 | Brunold, Axel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

**Nummer der Anmeldung**

EP 20 18 4888

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | PETER J [DE] ET AL: "TANDEM-MISCHVERFAHREN, TEIL 5: EINSATZ BEI TECHNISCHEN GUMMIWAREN", KAUTSCHUK + GUMMI KUNSTSTOFFE, HÜTHIG VERLAG HEIDELBERG [DE], Bd. 47, Nr. 9, 1. September 1994 (1994-09-01), Seiten 666-671, XP000444726, ISSN: 0948-3276 * das ganze Dokument * ----- | | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 16. November 2020 | Brunold, Axel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

Seite 2 von 2

## ANHANG ZUM EUROPÄISCHEN RECHERCHENBERICHT
## ÜBER DIE EUROPÄISCHE PATENTANMELDUNG NR.

EP 20 18 4888

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2020

| Im Recherchenbericht angeführtes Patentdokument | Datum der Veröffentlichung | Mitglied(er) der Patentfamilie | Datum der Veröffentlichung |
|---|---|---|---|
| US 2014200307 A1 | 17-07-2014 | BR 112014002274 A2<br>CN 103732370 A<br>EP 2736690 A1<br>FR 2978370 A1<br>US 2014200307 A1<br>WO 2013017505 A1 | 21-02-2017<br>16-04-2014<br>04-06-2014<br>01-02-2013<br>17-07-2014<br>07-02-2013 |
| CN 207630307 U | 20-07-2018 | KEINE | |
| CN 209699635 U | 29-11-2019 | KEINE | |
| DE 4129108 A1 | 04-03-1993 | AT 116592 T<br>DE 4129108 A1<br>EP 0530557 A1<br>US 5368383 A | 15-01-1995<br>04-03-1993<br>10-03-1993<br>29-11-1994 |
| EP 1382425 A2 | 21-01-2004 | EP 1382425 A2<br>US 2004125687 A1 | 21-01-2004<br>01-07-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2736690 B1
- EP 0618055 B1
- DE 4309451 A1
- DE 4129108 A1